# EUROPÄISCHE PATENTSCHRIFT

(11) **EP 1 098 703 B1**
(45) Veröffentlichungstag und Bekanntmachung des Hinweises auf die Patenterteilung: **09.08.2006**
(21) Anmeldenummer: 99929262.6
(22) Anmeldetag: 17.06.1999
(51) Int. Cl.: B01J 23/92, B01J 38/48, B01J 38/00, B01J 37/34, B01D 53/96

(54) **VERFAHREN ZUR REGENERATION VON KATALYSATOREN**
METHOD FOR REGENARATING CATALYSTS
PROCEDE DE REGENERATION DE CATALYSEURS

(30) Priorität: 06.07.1998 DE 19829916
(43) Veröffentlichungstag der Anmeldung: 16.05.2001
(73) Patentinhaber: Envica GmbH, 27793 Wildeshausen (DE)
(72) Erfinder: DITTMER, Eckhard, D-21423 Winsen (DE); SCHLUTTIG, Alexander, D-22117 Hamburg (DE)
(74) Vertreter: Siewers, Gescha
(86) Internationale Anmeldenummer: PCT/EP1999/004213
(87) Internationale Veröffentlichungsnummer: WO 2000/001483

(56) Entgegenhaltungen:
- EP-A- 0 472 853
- EP-A- 0 910 472
- DE-A- 19 805 295
- DE-C- 4 300 933
- US-A- 4 914 256
- DATABASE WPI Section Ch, Week 198108 Derwent Publications Ltd., London, GB; Class H04, AN 1981-11825D XP002119861 & CA 1 093 533 A (IMPERIAL OIL LTD), 13. Januar 1981 (1981-01-13)

## Beschreibung

Die Erfindung betrifft ein Verfahren zur Regeneration von Katalysatoren die bei der Umwandlung von Stickoxiden in molekularen Stickstoff eingesetzt werden.

Katalysatoren, welche die Reaktion nach den nachstehenden Summenformeln

4 NO + 4 NH₃ + O₂ → 4 N₂ + 6 H₂O

2 NO₂ + 4 NH₃ + O₂ → 3N₂ + 6 H₂O

werden in Verbrennungskraftwerken zur Reduktion von NOₓ zu N₂ in der Abluft eingesetzt. Dieser Katalysatortyp besteht im wesentlichen aus Titandioxid TiO₂, Wolframoxid WO₃ und als Aktivkomponente Vanadinpentoxid V₂O₅ und ist als keramischer Körper, vorzugsweise in Platten- oder Wabenstruktur ausgebildet. Für die katalytischen Aktivitäten ist die poröse Struktur des Katalysatormaterials und damit seine innere Oberfläche entscheidend. Die Umwandlung von Stickoxiden in molekularen Stickstoff erfolgt in Abluft von Kraftwerken bei Temperaturen von etwa 300 - 400°C. Im Kraftwerksbetrieb kommt es durch Flugasche, Bildung von Ammonsulfat und durch die in der Abluft enthaltenen Schwermetalle oder deren Oxide regelmäßig zu Verunreinigungen und damit zur Inaktivierung des Katalysators. Die partikulären Verunreinigungen wie Flugasche oder nichtflüchtige Salze oder Oxide bedingen eine Reduktion der aktiven Oberfläche des Katalysators, während gleichzeitig eine Vergiftung des Katalysators durch Schwermetalle oder Schwermetalloxide, die bei Betriebstemperatur flüchtig sind, sowie durch Alkali-, Erdalkali-, Arsen- und Phosphorverbindungen erfolgt. Ein typisches Katalysatorgift ist z.B. das bei den Betriebstemperaturen gasförmige Arsenoxid As₂O₃. DE-A-43 00 933 beschreibt ein Verfahren zur Regenerierung von Arsen vergifteten Denitrierkatalysatoren, bei dem der Katalysator mit einem wasserstoffhaltigen Gas bei Temperaturen von 100 bis 550°C und dann mit einem oxidierenden Gas bei Temperaturen von 20 bis 550°C behandelt wird. Eine starke Deaktivierung des Katalysators kann aber bei schwefelhaltigen Brennstoff und niederen Betriebstemperaturen auch durch die reaktionsbedingte Belegung des Katalysators mit Ammoniumhydrogensulfat erfolgen.

Partikuläre Verunreinigungen und chemische Desaktivierungen führen zu Oberflächen- und Aktivitätsverlusten und damit zwingend zur Notwendigkeit des Ersatzes durch Neukatalysatoren. In anderen Bereichen ist es durchaus bekannt, daß Katalysatoren einer Regeneration unterzogen werden können, beispielsweise durch Calcinieren. Die Möglichkeiten der Regeneration hängen vom Katalysatortyp sowie von den Verunreinigungen bzw. der Art der deaktivierenden chemischen Verbindungen ab. So führt die Behandlung dieses Katalysatortyps mit Temperaturen über 550°C zu irreversiblen Schädigungen infolge von thermischen Umwandlungen chemischer Verbindungen.

Bei den hier in Rede stehenden Katalysatoren, die die Umwandlung von Stickoxiden in molekularen Stickstoff katalysieren, ist eine wirkungsvolle Regeneration bisher zudem auch deshalb nicht möglich gewesen, weil man nach dem Stand der Technik der Auffassung war, daß dieser Katalysatortyp feuchtigkeits- bzw. wasserempfindlich ist und daher auch stets davon ausgegangen wurde, daß die Zuführung von Feuchtigkeit bzw. Wasser, die notwendigerweise während einer Regeneration erfolgt, zu einer Schädigung des Katalysators führen würde.

Alle technischen Dokumentationen und Betriebshandbücher der Hersteller der hier in Rede stehenden denitrifizierenden Katalysatoren wiesen ausdrücklich auf die Notwendigkeit der Vermeidung des Eindringens von Flüssigkeiten in den Katalysatoren hin.

Ein neuer Ansatz in diesem Hinblick ist das in der nachveröffentlichten EP 0 910 472 B1 beschriebene Verfahren zur Regenerierung von ganz oder teilweise desaktivierten Katalysatoren zur Entstickung von Rauchgas, bei dem die Katalysatoren mit ungesäuertem Deionat als Regenerierflüssigkeit behandelt werden. Dem Verfahren gemäß EP 0 910 472 B1 werden allgemein SCR-Katalysatoren unterzogen. Mit dem in EP 0 910 472 B1 beschriebenen Verfahren ist es allerdings weder beabsichtigt noch möglich, sowohl partikuläre Verschmutzungen als auch alle inaktivierenden Chemikalien, vorzugsweise Alkali- und Erdalkalimetalle, Arsen und Phosphor aus der Keramikstruktur des Katalysators, die zudem Kationentauscher-Eigenschaften besitzt und somit speziell Kationen stark bindet, zu entfernen. Damit kann der Katalysator wohl weitgehend von partikulären Verunreinigungen befreit werden, die Erhöhung der chemischen Aktivität der regenerierten Katalysatoren ist nicht zufriedenstellend, weil spezielle Bedingungen der Loslösung o.g. chemischer Verunreinigungen von der keramischen Matrix mit erfindungsgemäß angesäuertem Deionat nicht erreicht werden können. Bekanntermaßen lassen sich Kationen von lonentauschern nur durch Austausch durch Wasserstoffionen lösen. Dies kann durch ungesäuertes Deionat nicht geleistet werden.

Völlig überraschend hat sich jetzt herausgestellt, daß sich auch keramische Katalysatoren des Titan-, Wolfram- und Vanadinoxidtyps mit ausgezeichneter Wirksamkeit dann regenerieren lassen, wenn sie der Wirkung von Ultraschall in Flüssigkeit in Kombination mit einer Bewegung des Katalysators in der Flüssigkeit ausgesetzt werden.

Erfindungsgemäß wird daher ein Verfahren zur Regeneration von Katalysatoren vorgeschlagen, das dadurch gekennzeichnet ist, daß der Katalysator in einer Reinigungslösung bewegt und einer Ultraschallbehandlung unterzogen wird.

Vorzugsweise werden dieser chemisch- physikalischen Regeneration Vor- und Nachbehandlungsschritte vor- bzw. nachgeschaltet, um die Effizienz des Verfahrens weiter zu erhöhen. Bei dieser bevorzugten Ausführungsform werden die verunreinigten Katalysatoren mit trockenmechanischen Mitteln wie z.B. Industriestaubsaugern, vorgereinigt, so daß alle nicht fest anhaftenden partikulären Verunreinigungen im trockenen Zustand entfernt werden. Bei Vorhandensein besonders hartnäckiger Verkrustungen kann zusätzlich eine Vorbehandlung mit Flüssigkeit, und zwar vorzugsweise Wasser unter erhöhtem Druck, notwendig werden. Diese zweite Stufe der Vorbehandlung erfolgt mit den üblichen Druckreinigern.

In einem nächsten Vorbehandlungsschritt wird der Katalysator vorzugsweise in einem Verdrängungsreaktor von allen Flugaschepartikeln in dem inneren Röhrensystem der Keramiken befreit. Gleichzeitig erfolgt eine Flüssigkeitsaufnahme in die porösen Strukturen des Katalysators und eine Lösung leichtlöslicher Verunreinigungen aus diesen Strukturen sowie eine Anlösung und damit Lockerung schwerlöslicher Verbindungen innerhalb der Keramik. Das Lösungsmittel, also in der Regel Wasser, kann in seiner Wirksamkeit durch Bewegung verstärkt werden. So werden die Katalysatoren mittels Kran in das Verdrängungsbecken eingebracht und dann mit unterbrochenen Auf- und Abbewegungen, ggf. unter Zuhilfenahme von Abspritzungen, für einen längeren Zeitraum unterzogen.

Die im Verdrängungsbecken vorhandene Flüssigkeit ist in der Regel Wasser, das aber, je nach Belastung des Katalysators, auch einen gewissen Anteil an niederen Alkoholen, in der Regel bis etwa 20%, enthalten kann. Diese Lösung kann Zusätze enthalten, die die Löslichkeit von Katalysatorgiften verbessern bzw. die Umsetzungen beschleunigen, wobei im übrigen die Verfahrensparameter Temperatur, pH-Wert, Leitfähigkeit und Reaktionszeit vom Fachmann vorher je nach Art der im Katalysator vorliegenden Verunreinigungen und Belastungen experimentell ermittelt und eingestellt werden. Als Zusätze sind beispielsweise Tenside, Flotationshilfsmittel, Komplexbildner und ähnliche Verbindungen geeignet.

Nachdem der Katalysator im Verdrängungsbecken von Flugaschepartikeln und zumindest einem Teil der Katalysatorgifte gereinigt worden ist, wird der Katalysator überführt in den Ultraschallreaktor, um auch mikropartikuläre Verunreinigungen und noch vorhandene Katalysatorgifte zu entfernen. Im Ultraschallreaktor wird der Katalysator einer hochfrequenten Ultraschallschwingung bei gleichzeitiger Durchströmung mittels Hubbewegung in einer Flüssigkeit ausgesetzt. Die Ultraschallbehandlung erfolgt von den geöffneten Seiten des Katalysators wechselweise oder gleichzeitig. Die Beschallungsintensität ist regel- und dem Verschmutzungsgrad anpaßbar. Während der Ultrabeschallung wird der Katalysator durch eine geeignete Hubvorrichtung im Beschallungsbecken so bewegt, daß an den inneren Oberflächen Flüssigkeitsströmungen auftreten und eine Wanderung der Ultraschallaktivitätszonen auf den zu reinigenden Oberflächen erfolgt. Die Ultraschallschwingung liegt in der Regel etwa im Bereich von 27 bis 40 kHz.

Der Reinigungsflüssigkeit, in der Regel Wasser, können ebenfalls Chemikalien zugesetzt werden, die die Ablösung von schwerlöslichen Verunreingiungen und Katalysatorgiften verbessern, wie beispielsweise - je nach Belastung des Katalysators - Laugen, Säuren, Tenside oder Komplexbildner. Die Behandlung erfolgt bei Temperaturen zwischen dem Gefrier- und dem Siedepunkt der Behandlungsflüssigkeit, vorzugsweise bei etwa 40 - 80°C.

Nach Abschluß der Ultraschallbehandlung wird der Katalysator dem Reaktor entnommen und bespült. Die Spüle kann als Spritz-, Tauch- oder Kombinationsspüle ausgebildet sein; in ihr werden mittels einer Flüssigkeit, vorzugsweise destilliertem oder Leitungswasser, die aus der Ultraschallbehandlung noch verbliebenen Reststoffe von den Katalysatoroberflächen entfernt.

Temperatur, pH-Wert und mögliche Zusätze zur Spülflüssigkeit richten sich nach den festgestellten Verunreinigungen und deren noch vorhandenen Ausmaß.

Nach der Spülung wird der flüssigkeitsbeladene Katalysator mittels Luft getrocknet, wobei die Trocknung vorzugsweise mit bewegter, getrockneter sowie öl- und partikelfreier Luft erfolgt bei Temperaturen zwischen 20 und 400°C, vorzugsweise zwischen 20 und 120°C und vorzugsweise in einer Trockenkammer.

Die Regeneration der beschriebenen Katalysatoren durch das erfindungsgemäße Verfahren erfolgt - selbst ohne Optimierung der Verfahrensbedingungen - bis zu 95%, bezogen auf die Ausgangsaktivität des Katalysators. Durch Optimierung der Verfahrensbedingungen kann eine fast 100%-ige Regeneration erreicht werden.

Die Erfindung wird nunmehr anhand mehrerer Beispiele näher erläutert:

### Ausführungsbeispiel 1

Das Ausführungsbeispiel 1 betrifft die Regeneration von Katalysatoren vorbeschriebenen Typs mittels destilliertem Wasser ohne Zusätze jeglicher Art. Destilliertes Wasser fällt im Kraftwerksbetrieb als sogenanntes Deionat in ausreichenden Mengen an. Der Vorteil der Verwendung destillierten Wassers liegt in seiner hohen ionischen Aufnahmekapazität. Desweiteren beträgt die Anfalltemperatur von Deionat 30 - 35°C, so daß eine zusätzliche Erwärmung nur in geringem Umfang notwendig ist.

Bei der Verwendung zusatzfreien destillierten Wassers wird die Ablagerung von Zusätzen auf der Katalysatoroberfläche vermieden und es sind zusätzliche Spülvorgänge nicht notwendig.

Die verunreinigten Katalysatoren werden nach Demontage aus der Katalysatoranlage zunächst mit trockenmechanischen Mitteln unter Verwendung von Industriestaubsaugern so vorgereinigt, daß eine Entfernung aller nicht fest anhaftenden partikulären Verunreinigungen im trockenen Zustand erfolgt. Der Anteil der Verstopfungen der Katalysatoreninnenräume beträgt in Abhängigkeit vom Verschmutzungsgrad in der Regel 2 % - 35 %.

Je nach Verschmutzungsgrad liegen die oberflächlich entfernten Flugaschenmengen zwischen 5 kg und 30 kg pro Katalysatormodul. Hartnäckige Verkrustungen und Ablagerungen werden durch Abspritzen mit destilliertem Wasser unter erhöhtem Druck entfernt. Das destillierte Wasser (Deionat) hat einen pH-Wert zwischen 7,5 und 8,5 und eine elektrische Leitfähigkeit von ca. 1 myS/cm².

Das Vorreinigungswasser wird gemeinsam mit den Abwässern der weiteren Behandlungsstufen einer Abwasserbehandlungsanlage zugeführt. Die so vorbehandelten Katalysatormodule werden mittels eines Kranes dem Verdrängungsreaktor zugeführt. Der Verdrändungsreaktor ist mit destilliertem Wasser mit einem pH-Wert zwischen 7,5 und 8,5 und einer elektrischen Leitfähigkeit von ca. 1 myS/cm² so gefüllt, daß die Katalysatormodule darin vollständig untertauchen. Im Verdrängungsreaktor werden die Katalysatoren von sämtlichen Flugaschepartikeln in den Katalysatorinnenräumen befreit. Gleichzeitig erfolgt eine Aufnahme des destillierten Wassers in die porösen Strukturen des Katalysators und eine Lösung leichtlöslicher Verunreinigungen aus den porösen Strukturen sowie eine Anlösung schwerlöslicher Verbindungen in den porösen Strukturen. Diese Effekte werden durch ein beschleunigtes Einbringen der Katalysatoren in das Verdrängungsbecken mittels Kran und ein längeres Verweilen mit unterbrochenen Auf- und Abbewegungen des Katalysators sowie unter Zuhilfenahme von Abspritzungen erreicht.

Die Behandlungszeit im Verdrängungsreaktor beträgt mindestens 5 Stunden. Während der Behandlung wird der Verdrängungsreaktor mit destilliertem Wasser mit einer Verweilzeit von 4 - 6 Stunden durchströmt. Die Beschickung des Verdrängungsreaktors erfolgt kontinuierlich im gleichen Zeitintervall wie die Entnahme der behandelten Katalysatorenmodule. Für jeden nach der Behandlungszeit von 6 Stunden entnommenen Katalysator wird ein zu behandelnder in den Verdrängungsreaktor eingebracht. Die Temperatur im Verdrängungsreaktor beträgt 25°C - 35°C. Während der kontinuierlichen Behandlung stellen sich im destillierten Wasser des Verdrängungsreaktors ein pH-Wert und eine elektrische Leitfähigkeit ein, die stark von der Zusammensetzung der Verunreinigungen abhängen.

Insbesondere Katalysatoren, welche bei der Abgasreinigung aus der Verbrennung schwefelreicher Kohlen eingesetzt werden, zeigen hohe Sulfatgehalte in der Flugasche und gegebenenfalls Ablagerungen sublimierten Schwefels an den Außenflächen des Katalysatormoduls. Diese Verunreinigungen erzeugen einen pH-Wert zwischen 1,8 und 4,3.

Nach Behandlung des Katalysatormoduls im Austragungsreaktor wird dieser mittels Kran aus der Behandlungsflüssigkeit entnommen und bei Bedarf mit destilliertem Wasser abgespült.

Der Katalysatormoldul wird dann mittels Kran der Prozeßstufe Ultraschallbehandlung zugeführt. Im Ultraschallreaktor wir der Katalysator einer hochfrequenten Ultraschallschwingung mit einer Frequenz von 27 kHz bis 40 kHz und einer Leistungsdichte von ca. 6 Watt / Liter bei gleichzeitiger Durchströmung mittels Hubbewegung (100 mm Hubhöhe, 5 - 8 Hübe pro Minute) in destilliertem Wasser mit einer Temperatur von 40°C ausgesetzt. Je nach Verschmutzungsgrad wird die Temperatur erhöht, so daß in der Regel im Bereich zwischen 40°C und 80°C gearbeitet wird. Die Ultrabeschallung erfolgt von den beiden geöffneten Seiten des Katalysators gleichzeitig. Die Beschallungsintensität ist regel- und dem Verschmutzungsgrad anpaßbar. Sie ist in 5 %-Stufen zwischen 100 % und 0 % regelbar. Die Behandlungszeit beträgt in der Regel 15 Minuten. Sie kann bei hartnäckigen Verschmutzungen beliebig erhöht werden.

Nach Abschluß der Ultraschallbehandlung wird der Katalysator mittels Kran aus dem Ultraschallreaktor entnommen und einer Fertigspüle zugeführt. Die Fertigspüle ist als Spritzspüle ausgebildet. Mittels einer Handspritze werden die katalytisch aktiven Innenflächen des Katalysatormoduls mit insgesamt ca. 100 Litern destillierten Wassers mit einer Temperatur von 33°C über einen Zeitraum von 3 Minuten abgespült. Das Wasser aus der Fertigspüle wird gesammelt und dem Austragungsreaktor zugeführt.

Anschließend an die Fertigspüle wird der Katalysatormodul in eine Trockenkammer gebracht und mit getrockneter, öl- und partikelfreier Luft von unten nach oben bei einer Temperatur von 70°C solange durchströmt, bis die aus dem Katalysatormodul ausströmende Luft eine relative Luftfeuchte von kleiner als 20 % aufweist. Die Austrittstemperatur der Luft aus dem Katalysator entspricht dann ihrer Eintrittstemperatur. Die benötigte Trocknungszeit bei einem Trockenluft-Durchströmungsvolumen von 4000m³ pro Katalysatormodul pro Stunde beträgt 8 Stunden.

Der so regenerierte Katalysator wird nach Abkühlung anschließend wieder in die Katalysatoranlage eingebaut.

### Ausführungsbeispiel 2

Das Ausführungsbeispiel 2 betrifft die Regeneration von Katalysatoren vorbeschriebenen Typs mittels destilliertem Wasser mit Zusätzen. Das Verfahren verläuft wie in Ausführungsbeispiel 1, wobei dem destillierten Wasser im Verdrängungsreaktor Detergentien zur Verminderung der Oberflächenspannung des Wassers zugesetzt werden. Als Detergentien werden kationische oder anionische Tenside in Konzentrationen von 0,001 % (vol.) bis 0,1 % (vol.) zugesetzt. Alle anderen Prozeßparameter verbleiben wie in Ausführungsbeispiel 1.

### Ausführungsbeispiel 3

Das Ausführungsbeispiel 3 betrifft die Regeneration von Katalysatoren vorbeschriebenen Typs mittels destilliertem Wasser mit Tensiden und Chemikalien zur Regulierung des pH-Wertes.

Das Verfahren verläuft wie in Ausführungsbeispiel 2, wobei dem destillierten Wasser im Verdrängungsbehälter Detergentien zur Verminderung der Oberflächenspannung des Wassers bei gleichzeitiger Zugabe von Säuren und/oder Laugen zur Regulierung und Aufrechterhaltung eines optimalen pH-Wertes während des Austragungsvorganges zugegeben werden. Als regulierende Säuren und Laugen werden vorzugsweise Natronlauge und Salzsäure eingesetzt. Alle anderen Prozeßparameter wie in Ausführungsbeispiel 2.

### Ausführungsbeispiel 4

Das Ausführungsbeispiel 4 betrifft die Regeneration von Katalysatoren vorbeschriebenen Typs mittels Trinkwasser an Stelle destillierten Wassers in allen Prozeßstufen. Das Verfahren verläuft wie in den Ausführungsbeispielen 1 - 3.

### Ausführungsbeispiel 5

Das Ausführungsbeispiel 5 betrifft die Regeneration von Katalysatoren vorbeschriebenen Typs mittels Trinkwasser nur in der Prozeßstufe Verdrängung. Das Verfahren verläuft ansonsten wie in den Ausführungsbeispielen 1 - 3. Im Verdrängungsreaktor wird statt des destillierten Wassers Trinkwasser verwendet. Im Ultraschallreaktor und zum Fertigspülen erfolgt die Verwendung destillierten Wassers. Alle anderen Prozeßparameter wie in Ausführungsbeispiel 1.

### Ausführungsbeispiel 6

Das Ausführungsbeispiel 6 betrifft die Regeneration von Katalysatoren vorbeschriebenen Typs mittels Zusatz eines Komplexbildners in der Prozeßstufe Ultraschallbehandlung. Dem destillierten Wasser werden im Ultraschallreaktor Komplexbildner, vorzugsweise Ethylendiamintetraacetat, EDTA, in Konzentrationen von 0,1 - 5 % zugesetzt. Das Verfahren verläuft ansonsten wie in Ausführungsbeispiel 1.

## Patentansprüche

1. Verfahren zur Regeneration von Katalysatoren, welche die Reduktion von Stickoxiden zu molekularem Stickstoff katalysieren und die im wesentlichen aus Titanoxid TiO₂, Wolframoxid WO₃ und der Aktivkomponente Vanadinpentoxid V₂O₅ bestehen und als keramische Körper, vorzugsweise in Platten- oder Wabenstruktur ausgebildet sind, **dadurch gekennzeichnet, dass** der Katalysator in einer Reinigungslösung einer Ultraschallbehandlung unter gleichzeitiger Hubbewegung zwischen zwei Ultraschall-Schwingsystemen unterzogen wird.

2. Verfahren nach Anspruch 1, **dadurch gekennzeichnet, daß** der Katalysator einer Vorbehandlung auf trockenmechanischem Weg unterzogen wird.

3. Verfahren nach Anspruch 1 oder 2, **dadurch gekennzeichnet, daß** der Katalysator zusätzlich einer naßmechanischen Vorbehandlung unterzogen wird.

4. Verfahren nach Anspruch 1 bis 3, **dadurch gekennzeichnet, daß** der Katalysator vor der Ultraschallbehandlung einer Naßbehandlung im bewegten Austragungsmedium unterzogen wird.

5. Verfahren nach Anspruch 1 bis 4, **dadurch gekennzeichnet, daß** das Austragungsmedium im wesentlichen oder vollständig polar oder apolar ist.

6. Verfahren nach Anspruch 1 bis 5, **dadurch gekennzeichnet, daß** das Austragungsmedium im wesentlichen oder vollständig hydrophil ist.

7. Verfahren nach Anspruch 1 bis 6, **dadurch gekennzeichnet, daß** das Austragungsmedium im wesentlichen oder vollständig wäßrig ist.

8. Verfahren nach Anspruch 1 bis 7, **dadurch gekennzeichnet, daß** das Austragungsmedium Zusatzstoffe zur Verbesserung und/oder Beschleunigung der Austragung enthält.

9. Verfahren nach Anspruch 1 bis 8, **dadurch gekennzeichnet, daß** die Ultraschallbehandlung bei Temperaturen zwischen Gefrier- und Siedepunkt der Reinigungslösung, vorzugsweise zwischen 40 - 80°C durchgeführt wird.

10. Verfahren nach Anspruch 1 bis 9, **dadurch gekennzeichnet, daß** die Reinigungslösung Zusatzstoffe zur Beschleunigung oder Verbesserung der Ablösung mikropartikulärer Verunreinigungen oder der Löslichmachung von Katalysatorgiften enthält.

11. Verfahren nach Anspruch 1 bis 10, **dadurch gekennzeichnet, daß** die Ultraschallbehandlung von einer oder von beiden geöffneten Seiten des Katalysators her gleichzeitig oder abwechselnd erfolgt.

12. Verfahren nach Anspruch 1 bis 11, **dadurch gekennzeichnet, daß** der Katalysator nach Beendigung der Ultraschallbehandlung mit vorzugsweise einer wäßrigen Flüssigkeit gespült wird.

13. Verfahren nach Anspruch 1 bis 12, **dadurch gekennzeichnet, daß** der Katalysator nach der Spülung bei Temperaturen zwischen 20 bis 400°C in einer Trockenkammer getrocknet wird.

14. Verfahren nach Anspruch 1 bis 13, **dadurch gekennzeichnet, daß** die Trocknung in bewegter Luft erfolgt.

## Claims

1. Process for regenerating catalysts which catalyse the reduction of nitrogen oxides to molecular nitrogen and which essentially comprise titanium oxide TiO₂, tungsten oxide WO₃ and the active component vanadium pentoxide V₂O₅, and which are in the form of ceramic bodies, preferably with a plate or honeycomb structure, **characterised in that** the catalyst is subjected to an ultrasonic treatment in a cleaning solution with simultaneous reciprocating motion between two ultrasonic vibration systems.

2. Process according to Claim 1, **characterised in that** the catalyst is subjected to a pretreatment by dry-mechanical means.

3. Process according to Claim 1 or 2, **characterised in that** the catalyst is additionally subjected to a wet-mechanical pretreatment.

4. Process according to Claim 1 to 3, **characterised in that**, before the ultrasonic treatment, the catalyst is subjected to a wet treatment in the moving extraction medium.

5. Process according to Claim 1 to 4, **characterised in that** the extraction medium is substantially or entirely polar or apolar.

6. Process according to Claim 1 to 5, **characterised in that** the extraction medium is substantially or entirely hydrophilic.

7. Process according to Claim 1 to 6, **characterised in that** the extraction medium is substantially or entirely aqueous.

8. Process according to Claim 1 to 7, **characterised in that** the extraction medium contains additives for improving and/or speeding up the extraction.

9. Process according to Claim 1 to 8, **characterised in that** the ultrasonic treatment is performed at temperatures between the freezing and boiling point of the cleaning solution, preferably between 40 and 80°C.

10. Process according to Claim 1 to 9, **characterised in that** the cleaning solution contains additives for speeding up or improving the separation of microparticulate contaminants or the solubilising of catalyst poisons.

11. Process according to Claim 1 to 10, **characterised in that** the ultrasonic treatment takes place simultaneously or in alternation from one or both opened sides of the catalyst.

12. Process according to Claim 1 to 11, **characterised in that**, after the ultrasonic treatment has ended, the catalyst is rinsed with preferably an aqueous liquid.

13. Process according to Claim 1 to 12, **characterised in that**, after the rinsing, the catalyst is dried in a drying chamber at temperatures between 20 and 400°C.

14. Process according to Claim 1 to 13, **characterised in that** the drying takes place in air that is in motion.

## Revendications

1. Procédé de régénération de catalyseurs qui catalysent la réduction d'oxydes d'azote en azote moléculaire, qui sont essentiellement constitués d'oxyde de titane TiO₂, d'oxyde de tungstène WO₃ et de pentoxyde de vanadium V₂O₅, ce dernier étant le composant actif, et qui se trouvent mis sous forme de corps céramiques, et de préférence sous forme de structures de type plaque ou nid d'abeilles, **caractérisé en ce qu'**on soumet le catalyseur, placé dans une solution de nettoyage, à un traitement par ultrasons tout en lui imprimant un mouvement de va-et-vient entre deux systèmes vibratoires ultrasoniques.

2. Procédé conforme à la revendication 1, **caractérisé en ce que** l'on fait subir au catalyseur un prétraitement mécanique à sec.

3. Procédé conforme à la revendication 1 ou 2, **caractérisé en ce que** l'on fait en outre subir au catalyseur un prétraitement mécanique en milieu humide.

4. Procédé conforme à l'une des revendications 1 à 3, **caractérisé en ce que** l'on fait subir au catalyseur, avant le traitement par ultrasons, un traitement en milieu humide dans un milieu transporteur mis en mouvement.

5. Procédé conforme à l'une des revendications 1 à 4, **caractérisé en ce que** le milieu transporteur est majoritairement ou totalement polaire ou apolaire.

6. Procédé conforme à l'une des revendications 1 à 5, **caractérisé en ce que** le milieu transporteur est majoritairement ou totalement hydrophile.

7. Procédé conforme à l'une des revendications 1 à 6, **caractérisé en ce que** le milieu transporteur est majoritairement ou totalement aqueux.

8. Procédé conforme à l'une des revendications 1 à 7, **caractérisé en ce que** le milieu transporteur contient des adjuvants dont le rôle est d'améliorer et/ou d'accélérer le transport.

9. Procédé conforme à l'une des revendications 1 à 8, **caractérisé en ce que** l'on effectue le traitement par ultrasons à des températures situées entre le point de congélation et le point d'ébullition de la solution de nettoyage, et de préférence entre 40 et 80 °C.

10. Procédé conforme à l'une des revendications 1 à 9, **caractérisé en ce que** la solution de nettoyage contient des adjuvants dont le rôle est d'accélérer ou d'améliorer l'enlèvement des impuretés microparticulaires ou la solubilisation des poisons du catalyseur.

11. Procédé conforme à l'une des revendications 1 à 10, **caractérisé en ce que** l'on effectue le traitement par ultrasons avec de ultrasons venant d'un côté ou des deux côtés exposés du catalyseur, simultanément ou alternativement.

12. Procédé conforme à l'une des revendications 1 à 11, **caractérisé en ce que**, une fois terminé le traitement par ultrasons, on rince le catalyseur, de préférence avec un liquide aqueux.

13. Procédé conforme à l'une des revendications 1 à 12, **caractérisé en ce que**, après le rinçage, on fait sécher le catalyseur dans une étuve, à des températures de 20 à 400 °C.

14. Procédé conforme à l'une des revendications 1 à 13, **caractérisé en ce que** l'on effectue le séchage dans de l'air mis en circulation.
